# EUROPEAN PATENT SPECIFICATION

(11) **EP 3 637 866 B1**
(45) Date of publication and mention of the grant of the patent: **03.05.2023**
(21) Application number: 17921195.8
(22) Date of filing: 11.08.2017
(51) Int. Cl.: H04W 52/02, H04W 68/02

(54) **PAGING METHOD, TERMINAL DEVICE, AND NETWORK DEVICE**
FUNKRUFVERFAHREN, ENDGERÄT UND NETZWERKVORRICHTUNG
PROCÉDÉ DE RADIOMESSAGERIE, DISPOSITIF DE TERMINAL ET DISPOSITIF DE RÉSEAU

(43) Date of publication of application: 15.04.2020
(73) Proprietor: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan Guangdong 523860 (CN)
(74) Representative: Rossi, Ugo
(86) International application number: PCT/CN2017/097264
(87) International publication number: WO 2019/028910

(56) References cited:
- WO-A1-2016/022748
- WO-A1-2016/119206
- WO-A1-2016/140271
- WO-A1-2017/026188
- WO-A1-2017/049625
- CN-A- 101 911 544
- CN-A- 106 550 435
- CN-A- 106 961 729
- US-A1- 2012 300 685
- "Paging Policy Enhancements and Procedure Optimizations in LTE", 3GPP TR 22.838 V14.0.0, 31 December 2015 (2015-12-31), XP051046984,
- "Study on Paging Permission with Access Control (PPAC)", 3GPP TR 22.908, V13.0.0, 31 December 2015 (2015-12-31), XP051047348,

## Description

### Technical Field

Embodiments of the present application relate to the field of wireless communication, and more particularly relate to a paging method, a terminal device, and a network device.

### Background

When a 5G system works on a high frequency band (i.e., a frequency band greater than 6GHz), path loss is proportional to the square of frequency change, large loss would occur in a short distance. Therefore, in order to improve reception quality of a signal, the signal will be sent in a mode of beam-forming. When the mode of beam-forming is adopted, for a common signal such as a downlink synchronization signal, a network device will perform beam scan in a cell range according to a certain period, and the scan will be performed in the mode of beam-forming in each period. In this case, when a paging message is sent, the paging message may be sent at a period that is the same as a period of the downlink synchronization signal, and thus multiple Paging Frames (PFs) that can be used for monitoring the paging message may be included within the duration when the downlink synchronization signal is sent each time. Therefore, when the transmission period of the paging message and the transmission period of the synchronization signal are the same, how the terminal device determines the time for receiving the paging message becomes an urgent problem to be solved. Related technologies include WO2016/140271A1, US2012/300685A1, WO2017/049625A1,WO2016/022748A1 and CN 106961729A.

### Summary

Embodiments of the present application provide a paging method, a terminal device and a network device according to the independent claims, by which the terminal device can effectively determine time for receiving a paging message when a transmission period of a paging message and a transmission period of a synchronization signal is same. Further improvements and embodiments are provided in the dependent claims.

In a first aspect, there is provided a paging method according to claim 1.

In a second aspect, there is provided a paging method according to claim 2.

In a third aspect, there is provided a terminal device according to claim 4.In a fourth aspect, there is provided a network device according to claim 5.

Preferred alternatives are presented in the dependent claim.

### Brief Description of Drawings

FIG. 1 is a schematic diagram of architecture of an application scenario according to an embodiment of the present application.
FIG. 2 is a schematic flowchart of a paging method according to an embodiment of the present application.
FIG. 3 is a schematic flowchart of a paging method according to another embodiment of the present application.
FIG. 4 is a schematic flowchart of a paging method according to yet another embodiment of the present application.
FIG. 5 is a schematic block diagram of a terminal device according to an embodiment of the present application.
FIG. 6 is a schematic block diagram of a network device according to an embodiment of the present application.
FIG. 7 is a schematic block diagram of a network device according to an embodiment of the present application.
FIG. 8 is a schematic diagram of structure of a terminal device according to an embodiment of the present application.
FIG. 9 is a schematic diagram of structure of a network device according to an embodiment of the present application.
FIG. 10 is a schematic diagram of structure of a network device according to an embodiment of the present application.
FIG. 11 is a schematic diagram of structure of a system chip according to an embodiment of the present application.

### Detailed Description

Hereinafter, technical solutions in embodiments of the present application will be described with reference to the accompanying drawings.

It should be understood that the technical solutions of the embodiments of the present application may be applied to various communication systems, such as a Global System of a Mobile Communication (GSM) system, a Code Division Multiple Access (CDMA) system, a Wideband Code Division Multiple Access (WCDMA) system, a Long Term Evolution (LTE) system, a LTE Frequency Division Duplex (FDD) system, an LTE Time Division Duplex (TDD) system, a Universal Mobile Telecommunication System (UMTS), and a future 5G communication system.

Various embodiments are described herein in connection with terminal devices in the present application. The terminal device may also refer to a User Equipment (UE), an access terminal, a subscriber unit, a subscriber station, a mobile station, a mobile platform, a remote station, a remote terminal, a mobile device, a user terminal, a terminal, a wireless communication device, a user agent, or a user apparatus. An access terminal may be a cellular phone, a cordless phone, a session initiation protocol (SIP) phone, a wireless local loop (WLL) station, a personal digital assistant (PDA), a handheld device with a wireless communication function, a computing device or other processing device connected to a wireless modem, an on-board device, a wearable device, a terminal device in a future 5G network, or a terminal device in a future evolved Public Land Mobile Network (PLMN), etc.

Various embodiments are described herein in connection with network devices in the present application. A network device may be a device for communicating with a terminal device, such as a Base Transceiver Station (BTS) in a GSM system or CDMA, a NodeB (NB) in a WCDMA system, or an Evolutional Node B (eNB or eNodeB) in an LTE system, or the network device may be a relay station, an access point, a vehicle-mounted device, a wearable device, a network side device in a future 5G network, or a network side device in a future evolved PLMN network, etc.

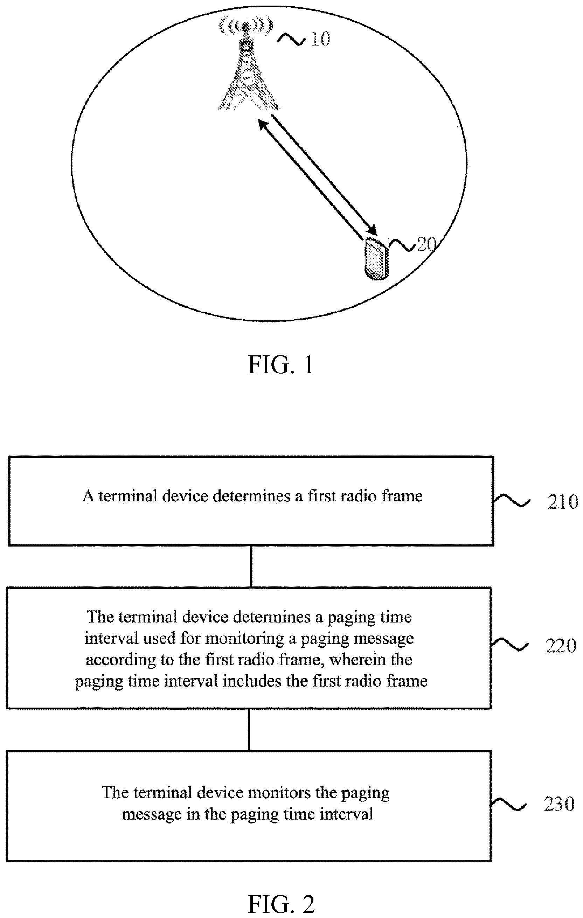

FIG. 1 is a schematic diagram of an application scenario of an embodiment of the present application. A communication system in FIG. 1 may include a network device 10 and a terminal device 20. The network device 10 is used for providing communication services for the terminal device 20 and is connected to a core network. The terminal device 20 may access the network by searching for a synchronization signal, or a broadcast signal, etc., sent by the network device 10, to communicate with the network. Arrows shown in FIG. 1 may represent uplink/downlink transmission through cellular links between the terminal device 20 and the network device 10.

The network in the embodiment of the present application may refer to a Public Land Mobile Network (PLMN) or a Device-to-Device (D2D) network or a Machine-to-Machine/Man (M2M) network or other networks. FIG. 1 is a simplified schematic diagram of an example, and other terminal devices may be included in the network and are not shown in FIG. 1.

When downlink data of a terminal device arrives, a network device may establish a signaling connection between the terminal device and the network device by paging the terminal device, thereby transmitting the downlink data.

A physical downlink shared channel (PDSCH) may carry paging messages of multiple terminal devices, the paging messages of the terminal devices form a paging record list, the terminal devices read each paging record in the paging record list, and each paging record includes a UE-IDentity (UE-ID) of the paged terminal device. If a terminal device finds that its UE-ID is consistent with a UE-ID in a paging record list, it may determine that it is paged by the network device.

In the 5G system, when the network device sends a paging message, the paging message may be sent in the same period as that of a downlink synchronization signal. A synchronization time interval used for the terminal device to detect a synchronization signal block (SS Block) is also a paging time interval used for the terminal device to detect the paging message. In this case, one paging time interval may include multiple paging frames (PFs) that can be used for sending a paging message. The terminal device may determine a PF used for monitoring a paging message based on a mode in the LTE, however, the terminal device cannot determine whether its own paging message is sent on the PF, because the network device may send the paging message on any PF in the paging time interval. Therefore, the terminal device needs to monitor the paging message throughout the paging time interval.

As such, the terminal device needs to know the specific time domain position of the paging time interval so as to better monitor the paging message. For example, assuming that the paging time interval includes two paging frames that can be used for sending the paging message, the terminal device determines that a system frame number (SFN) of the PF for receiving the paging message is equal to 4 based on the mode in the LTE. However, since the network device may send the paging message on any one of the two paging frames included in one paging time interval, the terminal device should monitor the paging message within the paging time interval.

For example, assuming that a paging cycle of the terminal device, namely a DRX cycle, includes N paging frames, and each paging frame can be used for transmitting a paging message. If the terminal device determines that an SFN of a certain paging frame is SFN=4, it cannot determine whether the paging message should be monitored in paging frames of SFN=3 and SFN=4, or in paging frames of SFN=4 and SFN=5, that is, it cannot determine the paging time interval where the paging message sent by the network device is located.

It should be understood that in the embodiments of the present application, the discontinuous reception (DRX) cycle of the terminal device may also be referred to as the paging cycle of the terminal device. In addition, the radio frame (or system frame) that can be used for sending the paging message in the embodiments of the present application may also be called the paging system frame or paging frame (PF).

In the embodiments of the present application, the terminal device may determine the paging time interval used for monitoring the paging message according to the radio frame determined by the terminal device and the position of the radio frame in the paging time interval, and monitor the paging message in the paging time interval. Thus the terminal device can also effectively determine the time for receiving the paging message when a transmission period of the paging message is same as that of a common signal such as a synchronization signal.

FIG. 2 is a schematic flowchart of a paging method according to an embodiment of the present application. The method shown in FIG. 2 may be performed by a terminal device, which may be, for example, the terminal device 20 shown in FIG. 1. As shown in FIG. 2, the paging method includes following steps.

In step 210, a terminal device determines a first radio frame.

In step 220, the terminal device determines a paging time interval used for monitoring a paging message according to the first radio frame, wherein the paging time interval includes the first radio frame.

In other words, each DRX cycle of the terminal device may include at least one paging time interval, and each paging time interval may include multiple paging frames that can be used for sending paging messages, and the first radio frame is included in the multiple paging frames.

The paging time interval is same as a synchronization time interval used for detecting a synchronization signal. That is, the time period during which the terminal device monitors the paging message is same as the time period during which the terminal device detects the synchronization signal.

In step 230, the terminal device monitors the paging message in the paging time interval.

In step 210, determining, by the terminal device, the first radio frame includes: the terminal device determines that a system frame number (SFN) of the first radio frame is SFN₁ according to SFN₁ mod T=(T/N)×(UE-ID mod N), wherein T is a time length of a DRX cycle of the terminal device, UE-ID is a device identity of the terminal device, and N is a quantity of radio frames that can be used for sending the paging message in a DRX cycle of the terminal device.

Specifically, the terminal device may determine a position of the PF that can be used for receiving its paging message, that is, an SFN of the PF, according to SFN₁ mod T=(T/N)×(UE-ID mod N), and the PF is the first radio frame. SFN₁ is an SFN of the PF, UE-ID is a device identity of the terminal device, T is a time length of a DRX cycle finally used by the terminal device, and N is a quantity of radio frames that can be used for receiving the paging message in each DRX cycle (i.e., a quantity of the PFs).

In SFN₁ mod T=(T/N)×(UE-ID mod N), T/N is equivalent to dividing each DRX cycle T into N parts, each part includes T/N radio frames, and the PF is a first radio frame in the T/N radio frames. Thus, N may be considered as a quantity of the PFs that can be used for receiving the paging message in each DRX cycle. N may be determined by N=min(T, nB), where nB may be configured by a system information block (SIB). For example, nB may be equal to 4T, 2T, T, T/2, T/4, T/8, or the like.

UE-ID mod N indicates that the terminal device selects the (UE-ID mod N)th part among the N parts (0 ≤ UE-ID mod N < N). It may be seen that which of the N parts is selected by the terminal device is determined by the UE-ID of the terminal device. The UE-ID of the terminal device may be determined by the International Mobile Subscriber Identity (IMSI) of the terminal device, for example, UE-ID=IMSI mod 1204. The terminal device selects the (UE-ID mod N)th part among the N parts, and uses the PF included in the (UE-ID mod N)th part. In this case, the system frame number SFN₁ of the PF may be determined according to SFN₁ mod T=(T/N)×(UE-ID mod N).

In step 220, determining, by the terminal device, the paging time interval used for monitoring the paging message according to the first radio frame, includes: the terminal device receives first indication information, wherein the first indication information is used for indicating a position of the first radio frame in the paging time interval; and the terminal device determines the paging time interval according to the position of the first radio frame in the paging time interval.

For example, assuming that the paging time interval includes two radio frames (or two PFs) that can be used for transmitting a paging message, if the first indication information indicates that the first radio frame is a first PF in the paging time interval, the terminal device determines that the paging time interval includes the first radio frame and a PF after the first radio frame. If the first indication information indicates that the first radio frame is a second PF in the paging time interval, the terminal device determines that the paging time interval includes the first radio frame and a PF before the first radio frame.

Optionally, in step 220, determining, by the terminal device, the paging time interval used for monitoring the paging message according to the first radio frame, includes: the terminal device determines a position of the first radio frame in the synchronization time interval; the terminal device determines that the position of the first radio frame in the synchronization time interval is the position of the first radio frame in the paging time interval; and the terminal device determines the paging time interval according to the position of the first radio frame in the paging time interval. This implementation is not part of the claimed invention.

Specifically, since the paging time interval is same as the synchronization time interval used for detecting the synchronization signal, the position of the first radio frame in the synchronization time interval may be considered as the position of the first radio frame in the paging time interval. So long as the terminal device determines the position of the first radio frame in the synchronization time interval of the synchronization signal such as the synchronization signal block (SS Block), the terminal device may know the position of the first radio frame in the synchronization time interval so as to determine the paging time interval according to the position of the first radio frame in the paging time interval.

Optionally, in step 220, determining, by the terminal device, the paging time interval used for monitoring the paging message according to the first radio frame, includes: the terminal device determines a second radio frame according to the first radio frame and SFN₂= M×SFN₁, wherein an SFN of the first radio frame is SFN₁, an SFN of the second radio frame is SFN₂, and M is a quantity of radio frames included in the paging time interval; and the terminal device determines the paging time interval according to the second radio frame. This implementation is not part of the claimed invention.

Since a time unit based on which the network device determines the paging time interval is a paging time interval, which is different from a time unit based on which the terminal device determines the first radio frame. If the paging time interval determined by the network device and used for sending the paging message includes the second radio frame (the system frame number of the second radio frame is SFN₂), the terminal device may determine the second radio frame by using SFN₂= M×SFN₁ and the first radio frame (the system frame number of the first radio frame is SFN₁) determined by the terminal device, and determine the paging time interval according to the second radio frame.

Optionally, determining, by the terminal device, the paging time interval according to the second radio frame, includes: the terminal device receives second indication information, wherein the second indication information is used for indicating a position of the second radio frame in the paging time interval; and the terminal device determines the paging time interval according to the position of the second radio frame in the paging time interval.

For example, if SFN₁=4 and M=2 (the paging time interval includes two radio frames), the terminal device may determine SFN₂=8. If the second indication information indicates that the second radio frame is the first PF in the paging time interval, the terminal device may determine that the paging time interval includes the second radio frame and a PF after the second radio frame. If the second indication information indicates that the second radio frame is the second PF in the paging time interval, the terminal device may determine that the paging time interval includes the second radio frame and a PF before the second radio frame.

In step 230, monitoring, by the terminal device, the paging message in the paging time interval includes: the terminal device receives third indication information, wherein the third indication information is used for indicating a third radio frame in the paging time interval; and the terminal device monitors the paging message on the third radio frame.

Specifically, the paging time interval includes multiple radio frames that can be used for sending a paging message, and the network device may send the paging message on any one of the radio frames that can be used for sending the paging message in the paging time interval. Therefore, the network device may send the third indication information to indicate to the terminal device which radio frame in the paging time interval is used for sending the paging message, so that the terminal device monitors the paging message on the radio frame, and the monitoring efficiency is improved.

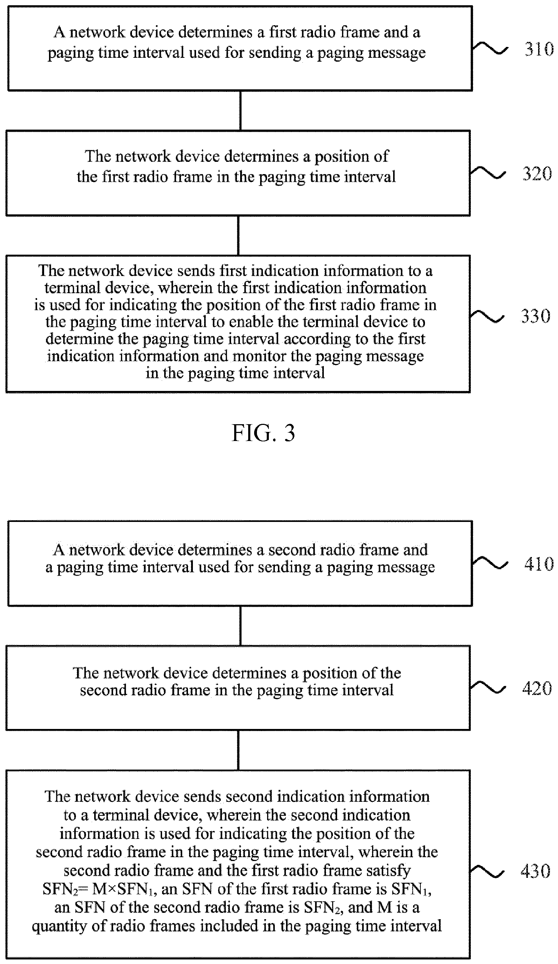

FIG. 3 is a schematic flowchart of a paging method according to an embodiment of the present application. The method shown in FIG. 3 may be performed by a network device, which may be, for example, the network device 10 shown in FIG. 1. As shown in FIG. 3, the paging method includes following steps.

In step 310, a network device determines a first radio frame and a paging time interval used for sending a paging message.

In step 320, the network device determines a position of the first radio frame in the paging time interval.

In step 330, the network device sends first indication information to a terminal device, wherein the first indication information is used for indicating the position of the first radio frame in the paging time interval to enable the terminal device to determine the paging time interval according to the first indication information and monitor the paging message in the paging time interval.

Therefore, by indicating the position of a specific radio frame to the terminal device, the network device enables the terminal device to determine the paging time interval used for monitoring the paging message according to the radio frame and the position of the radio frame in the paging time interval, and to monitor the paging message in the paging time interval. Thus the terminal device can also effectively determine the time for receiving the paging message when a transmission period of the paging message is same as that of a common signal such as a synchronization signal.

The paging time interval is same as a synchronization time interval used for detecting a synchronization signal.

Determining, by the network device, the first radio frame includes: determining, by the network device, that an SFN of the first radio frame is SFN₁ according to SFN₁ mod T=(T/N)×(UE-ID mod N), wherein T is a time length of a DRX cycle, UE-ID is a device identity of the terminal device, and N is a quantity of radio frames that can be used for sending the paging message in a DRX cycle of the terminal device.

Determining, by the network device, the position of the first radio frame in the paging time interval includes: the network device determines a position of the first radio frame in the synchronization time interval; and the network device determines that the position of the first radio frame in the synchronization time interval is the position of the first radio frame in the paging time interval.

Optionally, the method further includes the network device sends third indication information to the terminal device, wherein the third indication information is used for indicating a third radio frame in the paging time interval to enable the terminal device to monitor the paging message on the third radio frame.

It should be understood that the above description related to the terminal device in FIG. 2 may be referred to for the process of the network device determining the first radio frame and the paging time interval, which is not repeated here for the sake of brevity.

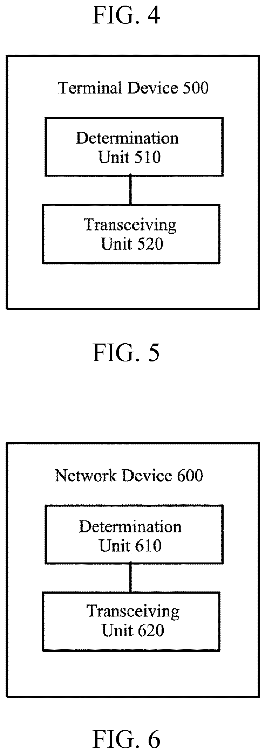

FIG. 4 is a schematic flowchart of a paging method according to an embodiment of the present application. The method shown in FIG. 4 may be performed by a network device, which may be, for example, the network device 10 shown in FIG. 1. As shown in FIG. 4, the paging method includes following steps. This implementation is not part of the claimed invention.

In step 410, a network device determines a second radio frame and a paging time interval used for sending a paging message.

In step 420, the network device determines a position of the second radio frame in the paging time interval.

In step 430, the network device sends second indication information to a terminal device, wherein the second indication information is used for indicating the position of the second radio frame in the paging time interval, to enable the terminal device to determine the second radio frame according to a first radio frame and the second indication information, determine the paging time interval according to the second radio frame, and monitor the paging message in the paging time interval.

The second radio frame and the first radio frame satisfy SFN₂= M×SFN₁, an SFN of the first radio frame is SFN₁, an SFN of the second radio frame is SFN₂, and M is a quantity of radio frames included in the paging time interval.

Therefore, by indicating the position of a specific radio frame to the terminal device, the network device enables the terminal device to determine the paging time interval used for monitoring the paging message according to the radio frame and the position of the radio frame in the paging time interval, and to monitor the paging message in the paging time interval. Thus the terminal device can also effectively determine the time for receiving the paging message when a transmission period of the paging message is the same as that of a common signal such as a synchronization signal.

Optionally, the paging time interval is same as a synchronization time interval used for detecting a synchronization signal.

Optionally, the first radio frame satisfies SFN₁ mod T=(T/N)×(UE-ID mod N), and the SFN of the first radio frame is determined as the SFN₁, wherein T is a time length of a DRX cycle, UE-ID is a device identity of the terminal device, and N is a quantity of radio frames that can be used for sending the paging message in a DRX cycle of the terminal device.

It should be understood that the above description related to the terminal device in FIG. 2 may be referred to for the process of the network device determining the second radio frame and the paging time interval, which is not repeated here for the sake of brevity.

It should be understood that in various embodiments of the present invention, values of sequence numbers in the above processes do not indicate an order of execution, and the order of execution of various processes should be determined by their functions and internal logics, and should not constitute any limitation on implementation processes of embodiments of the present application.

FIG. 5 is a schematic block diagram of a terminal device 500 according to an embodiment of the present application. As shown in FIG. 5, the terminal device 500 includes a determination unit 510 and a transceiving unit 520.

The determination unit 510 is used for determining a first radio frame.

The determination unit 510 is further used for determining a paging time interval used for monitoring a paging message according to the first radio frame, wherein the paging time interval includes the first radio frame.

The transceiving unit 520 is used for monitoring the paging message in the paging time interval.

Therefore, the terminal device may determine the paging time interval used for monitoring the paging message according to a radio frame determined by the terminal device and a position of the radio frame in the paging time interval, and monitor the paging message in the paging time interval. Thus the terminal device can also effectively determine the time for receiving the paging message when a transmission period of the paging message is same as that of a common signal such as a synchronization signal.

The paging time interval is same as a synchronization time interval used for detecting a synchronization signal.

The determination unit 510 is specifically used for: determining that an SFN of the first radio frame is SFN₁ according to SFN₁ mod T=(T/N)×(UE-ID mod N), wherein T is a time length of a discontinuous reception (DRX) cycle, UE-ID is a device identity of the terminal device, and N is a quantity of radio frames that can be used for sending the paging message in a DRX cycle of the terminal device.

The transceiving unit 520 is further used for receiving first indication information, wherein the first indication information is used for indicating a position of the first radio frame in the paging time interval; the determination unit 510 is specifically used for determining the paging time interval according to the position of the first radio frame in the paging time interval.

The determination unit 510 is specifically used for determining a position of the first radio frame in the synchronization time interval, determining that the position of the first radio frame in the synchronization time interval is the position of the first radio frame in the paging time interval, and determining the paging time interval according to the position of the first radio frame in the paging time interval.

Optionally, the determination unit 510 is specifically used for: determining a second radio frame according to the first radio frame and SFN₂= M×SFN₁, wherein an SFN of the first radio frame is SFN₁, an SFN of the second radio frame is SFN₂, and M is a quantity of radio frames included in the paging time interval; and determining the paging time interval according to the second radio frame.

Optionally, the transceiving unit 520 is further used for: receiving second indication information, wherein the second indication information is used for indicating a position of the second radio frame in the paging time interval; the determination unit 510 is specifically used for determining the paging time interval according to the position of the second radio frame in the paging time interval.

Optionally, the transceiving unit 520 is specifically used for: receiving third indication information, wherein the third indication information is used for indicating a third radio frame in the paging time interval; and monitoring the paging message on the third radio frame.

FIG. 6 is a schematic block diagram of a network device 600 according to an embodiment of the present application. As shown in FIG. 6, the network device 600 includes a determination unit 610 and a transceiving unit 620.

The determination unit 620 is used for determining a first radio frame and a paging time interval used for sending a paging message.

The determination unit 620 is further used for determining a position of the first radio frame in the paging time interval.

The transceiving unit 620 is used for sending first indication information to a terminal device, wherein the first indication information is used for indicating a position of the first radio frame in the paging time interval to enable the terminal device to determine the paging time interval according to the first indication information and monitor the paging message in the paging time interval.

Therefore, by indicating the position of a specific radio frame to the terminal device, the network device enables the terminal device to determine the paging time interval used for monitoring the paging message according to the radio frame and the position of the radio frame in the paging time interval, and to monitor the paging message in the paging time interval. Thus the terminal device can effectively determine the time for receiving the paging message when a transmission period of the paging message is same as that of a common signal such as a synchronization signal.

The paging time interval is same as a synchronization time interval used for detecting a synchronization signal.

The determination unit 620 is specifically used for determining that an SFN of the first radio frame is SFN₁ according to SFN₁ mod T=(T/N)×(UE-ID mod N), wherein T is a time length of a DRX cycle, UE-ID is a device identity of the terminal device, and N is a quantity of radio frames that can be used for sending the paging message in a DRX cycle of the terminal device.

The determination unit 620 is specifically used for determining a position of the first radio frame in the synchronization time interval and determining that the position of the first radio frame in the synchronization time interval is the position of the first radio frame in the paging time interval.

Optionally, the transceiving unit 620 is further used for sending third indication information to the terminal device, wherein the third indication information is used for indicating a third radio frame in the paging time interval to enable the terminal device to monitor the paging message on the third radio frame.

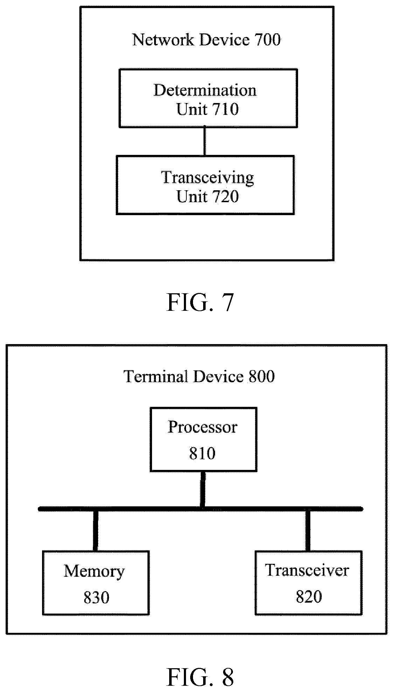

FIG. 7 is a schematic block diagram of a network device 700 according to an embodiment of the present application. As shown in FIG. 7, the network device 700 includes a determination unit 710 and a transceiving unit 720. This implementation is not part of the claimed invention.

The determination unit 710 is used for determining a second radio frame and a paging time interval used for sending a paging message.

The determination unit 710 is further used for determining a position of the second radio frame in the paging time interval.

The transceiving unit 720 is used for sending second indication information to a terminal device, wherein the second indication information is used for indicating the position of the second radio frame in the paging time interval to enable the terminal device to determine the second radio frame according to a first radio frame and the second indication information, determine the paging time interval according to the second radio frame, and monitor the paging message in the paging time interval.

The second radio frame and the first radio frame satisfy SFN₂= M×SFN₁, an SFN of the first radio frame is SFN₁, an SFN of the second radio frame is SFN₂, and M is a quantity of radio frames included in the paging time interval.

Therefore, by indicating the position of a specific radio frame to the terminal device, the network device enables the terminal device to determine the paging time interval used for monitoring the paging message according to the radio frame and the position of the radio frame in the paging time interval, and to monitor the paging message in the paging time interval. Thus the terminal device can also effectively determine the time for receiving the paging message when a transmission period of the paging message is same as that of a common signal such as a synchronization signal.

Optionally, the paging time interval is same as a synchronization time interval used for detecting a synchronization signal.

Optionally, the first radio frame satisfies SFN₁ mod T=(T/N)×(UE-ID mod N), and the SFN of the first radio frame is determined as the SFN₁, wherein T is a time length of a DRX cycle, UE-ID is a device identity of the terminal device, and N is a quantity of radio frames that can be used for sending the paging message in a DRX cycle of the terminal device.

FIG. 8 is a schematic diagram of structure of a terminal device 800 according to an embodiment of the present application. As shown in FIG. 8, the terminal device includes a processor 810, a transceiver 820, and a memory 830. The processor 810, the transceiver 820, and the memory 830 communicate with each other through an internal connection path. The memory 830 is used for storing instructions, and the processor 810 is used for executing the instructions stored in the memory 830 to control the transceiver 820 to send or receive signals. The processor 810 is used for determining a first radio frame and determining a paging time interval used for monitoring a paging message according to the first radio frame, wherein the paging time interval includes the first radio frame. This implementation is not part of the claimed invention.

The transceiver 820 is used for monitoring the paging message in the paging time interval.

Therefore, the terminal device may determine the paging time interval used for monitoring the paging message according to the radio frame determined by the terminal device and a position of the radio frame in the paging time interval, and monitor the paging message in the paging time interval. Thus the terminal device can effectively determine the time for receiving the paging message when a transmission period of the paging message is same as that of a common signal such as a synchronization signal.

Optionally, the paging time interval is same as a synchronization time interval used for detecting a synchronization signal.

Optionally, the processor 810 is specifically used for determining that an SFN of the first radio frame is SFN₁ according to SFN₁ mod T=(T/N)×(UE-ID mod N), wherein T is a time length of a DRX cycle, UE-ID is a device identity of the terminal device, and N is a quantity of radio frames that can be used for sending the paging message in a DRX cycle of the terminal device.

Optionally, the transceiver 820 is further used for receiving first indication information, wherein the first indication information is used for indicating a position of the first radio frame in the paging time interval.

The processor 810 is specifically used for determining the paging time interval according to the position of the first radio frame in the paging time interval.

Optionally, the processor 810 is specifically used for determining a position of the first radio frame in the synchronization time interval, determining that the position of the first radio frame in the synchronization time interval is the position of the first radio frame in the paging time interval, and determining the paging time interval according to the position of the first radio frame in the paging time interval.

Optionally, the processor 810 is specifically used for: determining a second radio frame according to the first radio frame and SFN₂= M×SFN₁, wherein an SFN of the first radio frame is SFN₁, an SFN of the second radio frame is SFN₂, and M is a quantity of radio frames included in the paging time interval; and determining, by the terminal device, the paging time interval according to the second radio frame.

Optionally, the transceiver 820 is further used for receiving second indication information, wherein the second indication information is used for indicating a position of the second radio frame in the paging time interval.

The processor 810 is specifically used for determining the paging time interval according to the position of the second radio frame in the paging time interval.

Optionally, the transceiver 820 is specifically used for: receiving third indication information, wherein the third indication information is used for indicating a third radio frame in the paging time interval; and monitoring the paging message on the third radio frame.

It should be understood that, in an embodiment of the present application, the processor 810 may be a central processing unit (CPU), or the processor 810 may be another general purpose processor, a digital signal processor (DSP), an application specific integrated circuit (ASIC), a field programmable gate array (FPGA) or another programmable logic device, a discrete gate or transistor logic device, or a discrete hardware component. The general purpose processor may be a microprocessor or the processor may be any conventional processor or the like.

The memory 830 may include a read-only memory and a random access memory, and provide instructions and data to the processor 810. A portion of memory 830 may include a non-volatile random access memory.

In an implementation process, the steps of the methods described above may be accomplished by integrated logic circuits of hardware in the processor 810 or instructions in a form of software. The steps of the paging method disclosed in the embodiment of the present application may be directly accomplished by an execution of a hardware processor or accomplished by a combination of hardware and software modules in the processor 810. The software modules may be located in a storage medium commonly used in the art, such as a random access memory, flash memory, read-only memory, programmable read-only memory or electrically erasable programmable memory, or register. The storage medium is located in the memory 830, and the processor 810 reads the information in the memory 830 and accomplishes the steps of the above method in combination with its hardware. In order to avoid repetition, it will not be described in detail here.

The terminal device 800 according to the embodiment of the present application may correspond to the terminal device for executing the method 200 in the method 200 and the terminal device 400 according to the embodiment of the present application, and various units or modules in the terminal device 800 are respectively used for executing various steps or processing processes executed by the terminal device in the method 200. Here, in order to avoid redundancy, detailed description thereof is omitted.

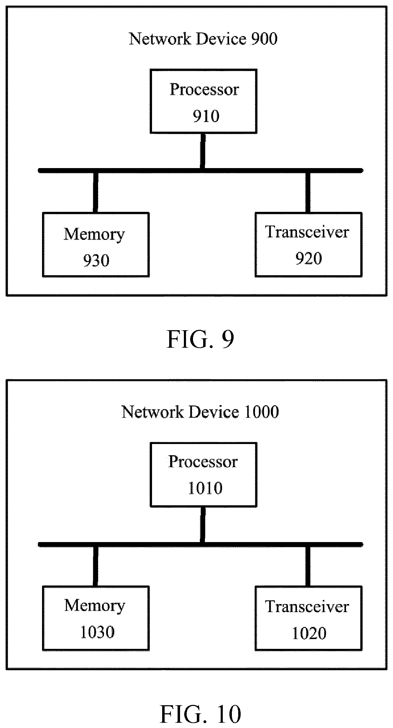

FIG. 9 is a schematic diagram of structure of a network device 900 according to an embodiment of the present application. As shown in FIG. 9, the network device includes a processor 910, a transceiver 920, and a memory 930. The processor 910, the transceiver 920, and the memory 930 communicate with each other through an internal connection path. The memory 930 is used for storing instructions, and the processor 910 is used for executing the instructions stored in the memory 930 to control the transceiver 920 to send or receive signals. The processor 910 is used for determining a first radio frame and a paging time interval used for sending a paging message, and determining a position of the first radio frame in the paging time interval. This implementation is not part of the claimed invention.

The transceiver 920 is used for sending first indication information to a terminal device, wherein the first indication information is used for indicating a position of the first radio frame in the paging time interval to enable the terminal device to determine the paging time interval according to the first indication information and monitor the paging message in the paging time interval.

Therefore, by indicating the position of a specific radio frame to the terminal device, the network device enables the terminal device to determine the paging time interval used for monitoring the paging message according to the radio frame and the position of the radio frame in the paging time interval, and to monitor the paging message in the paging time interval. Thus the terminal device can also effectively determine the time for receiving the paging message when a transmission period of the paging message is same as that of a common signal such as a synchronization signal.

Optionally, the paging time interval is same as a synchronization time interval used for detecting a synchronization signal.

Optionally, the processor 910 is specifically used for determining that an SFN of the first radio frame is SFN₁ according to SFN₁ mod T=(T/N)×(UE-ID mod N), wherein T is a time length of a DRX cycle, UE-ID is a device identity of the terminal device, and N is a quantity of radio frames that can be used for sending the paging message in a DRX cycle of the terminal device.

Optionally, the processor 910 is specifically used for determining a position of the first radio frame in the synchronization time interval and determining that the position of the first radio frame in the synchronization time interval is the position of the first radio frame in the paging time interval.

Optionally, the transceiver 920 is further used for sending third indication information to the terminal device, wherein the third indication information is used for indicating a third radio frame in the paging time interval to enable the terminal device to monitor the paging message on the third radio frame.

It should be understood that in an embodiment of the present application, the processor 910 may be a central processing unit (CPU), or the processor 910 may be another general purpose processor, a digital signal processor (DSP), an application specific integrated circuit (ASIC), a field programmable gate array (FPGA) or another programmable logic device, a discrete gate or transistor logic device, or a discrete hardware component. The general purpose processor may be a microprocessor or the processor may be any conventional processor or the like.

The memory 930 may include a read-only memory and a random access memory, and provide instructions and data to the processor 910. A portion of memory 930 may include non-volatile random access memory. In an implementation process, the steps of the methods described above may be accomplished by integrated logic circuits of hardware in the processor 910 or instructions in a form of software. The steps of the paging method disclosed in the embodiment of the present application may be directly accomplished by an execution of a hardware processor or accomplished by a combination of hardware and software modules in the processor 910. The software modules may be located in a storage medium commonly used in the art, such as a random access memory, flash memory, read-only memory, programmable read-only memory or electrically erasable programmable memory, or register. The storage medium is located in the memory 930, and the processor 910 reads the information in the memory 930 and accomplishes the steps of the above method in combination with its hardware. In order to avoid repetition, it will not be described in detail here.

The network device 900 according to the embodiment of the present application may correspond to the network device for executing the method 300 in the method 300 and the network device 600 according to the embodiment of the present application, and various units or modules in the network device 900 are respectively used for executing various steps or processing processes executed by the network device in the method 300. Here, in order to avoid redundancy, detailed description thereof is omitted.

FIG. 10 is a schematic diagram of structure of a network device 1000 according to an embodiment of the present application. As shown in FIG. 10, the network device includes a processor 1010, a transceiver 1020, and a memory 1030, wherein the processor 1010, the transceiver 1020, and the memory 1030 communicate with each other through an internal connection path. The memory 1030 is used for storing instructions, and the processor 1010 is used for executing the instructions stored in the memory 1030 to control the transceiver 1020 to send or receive signals. The processor 1010 is used for determining a second radio frame and a paging time interval used for sending a paging message, and determining a position of the second radio frame in the paging time interval. This implementation is not part of the claimed invention.

The transceiver 1020 is used for sending second indication information to a terminal device, wherein the second indication information is used for indicating a position of the second radio frame in the paging time interval to enable the terminal device to determine the second radio frame according to a first radio frame and the second indication information, determine the paging time interval according to the second radio frame, and monitor the paging message in the paging time interval.

The second radio frame and the first radio frame satisfy SFN₂= M×SFN₁, an SFN of the first radio frame is SFN₁, an SFN of the second radio frame is SFN₂, and M is a quantity of radio frames included in the paging time interval.

Therefore, by indicating the position of a specific radio frame to the terminal device, the network device enables the terminal device to determine the paging time interval used for monitoring the paging message according to the radio frame and the position of the radio frame in the paging time interval, and to monitor the paging message in the paging time interval. Thus the terminal device can also effectively determine the time for receiving the paging message when a transmission period of the paging message is the same as that of a common signal such as a synchronization signal.

Optionally, the paging time interval is same as a synchronization time interval used for detecting a synchronization signal.

Optionally, the first radio frame satisfies SFN₁ mod T=(T/N)×(UE-ID mod N), and the SFN of the first radio frame is determined as the SFN₁, wherein T is a time length of a DRX cycle, UE-ID is a device identity of the terminal device, and N is a quantity of radio frames that can be used for sending the paging message in a DRX cycle of the terminal device.

It should be understood that in an embodiment of the present application, the processor 1010 may be a central processing unit (CPU), or the processor 1010 may be another general purpose processor, a digital signal processor (DSP), an application specific integrated circuit (ASIC), a field programmable gate array (FPGA) or another programmable logic device, a discrete gate or transistor logic device, or a discrete hardware component. The general purpose processor may be a microprocessor or the processor may be any conventional processor or the like.

The memory 1030 may include a read-only memory and a random access memory, and provide instructions and data to the processor 1010. A portion of the memory 1030 may include a non-volatile random access memory. In an implementation process, the steps of the methods described above may be accomplished by integrated logic circuits of hardware in the processor 1010 or instructions in a form of software. The steps of the paging method disclosed in the embodiment of the present application may be directly accomplished by an execution of a hardware processor or accomplished by a combination of hardware and software modules in the processor 1010. The software modules may be located in a storage medium commonly used in the art, such as a random access memory, flash memory, read-only memory, programmable read-only memory or electrically erasable programmable memory, or register. The storage medium is located in the memory 1030, and the processor 1010 reads the information in the memory 1030 and accomplishes the steps of the above method in combination with its hardware. In order to avoid repetition, it will not be described in detail here.

The network device 1000 according to the embodiment of the present application may correspond to the network device for executing in the method 400 and the network device 700 according to the embodiment of the present application, and various units or modules in the network device 1000 are respectively used for executing various steps or processing processes executed by the network device in the method 400. Here, in order to avoid redundancy, detailed description thereof is omitted.

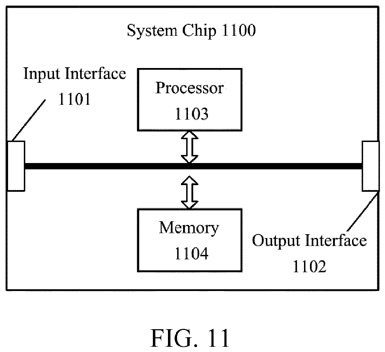

FIG. 11 is a schematic diagram of structure of a system chip according to an embodiment of the present application. The system chip 1100 of FIG. 11 includes an input interface 1101, an output interface 1102, at least one processor 1103, and a memory 1104. The input interface 1101, the output interface 1102, the processor 1103, and the memory 1104 are connected to each other through an internal connection path. The processor 1103 is used for executing codes in the memory 1104. This implementation is not part of the claimed invention.

Optionally, the processor 1103 may implement the method 200 executed by the terminal device in the method embodiment when the codes are executed. For the sake of brevity, it will not be repeated here.

Optionally, the processor 1103 may implement the method 300 executed by the network device in the method embodiment when the codes are executed. For the sake of brevity, it will not be repeated here.

Optionally, the processor 1103 may implement the method 400 executed by the network device in the method embodiment when the codes are executed. For the sake of brevity, it will not be repeated here.

Those of ordinary skill in the art will recognize that the exemplary units and algorithm steps described in connection with the embodiments disclosed herein may be implemented in electronic hardware, or a combination of computer software and electronic hardware. Whether these functions are implemented in hardware or software depends on a specific application and design constraint of the technical solution. Skilled in the art may use different manners to realize the described functions for each particular application, but such realization should not be considered to be beyond the scope of the present application.

Those skilled in the art may clearly understand that for convenience and conciseness of description, the specific working process of the system, device and unit described above may refer to the corresponding process in the aforementioned embodiments of methods, and details are not described herein again.

In several embodiments provided by the present application, it should be understood that the disclosed system, device and method may be implemented in other ways. For example, the device embodiment described above is only illustrative, for example, the division of the unit is only a logical function division, and there may be other ways of division in actual implementation, for example, multiple units or components may be combined or integrated into another system, or some features may be ignored or not executed. On the other hand, the mutual coupling or direct coupling or communication connection shown or discussed may be indirect coupling or communication connection through some interfaces, devices or units, and may be in electrical, mechanical or other forms.

The units described as separate components may or may not be physically separated, and the component shown as a unit may or may not be a physical unit, i.e., may be located in one place or may be distributed over multiple network units. Some or all of the units may be selected according to practical needs to achieve a purpose of the solution of the embodiments.

In addition, various functional units in various embodiments of the present application may be integrated in one monitoring unit, or various units may be physically present separately, or two or more units may be integrated in one unit.

The functions may be stored in a computer readable storage medium if implemented in a form of software functional units and sold or used as a separate product. Based on this understanding, the technical solution of the present application, in essence, or the part contributing to the existing art, or the part of the technical solution, may be embodied in the form of a software product stored in a storage medium, including several instructions for causing a computer device (which may be a personal computer, a server, or a network device, etc.) to perform all or part of the steps of the methods described in various embodiments of the present application. The aforementioned storage medium includes various media capable of storing program codes, such as a U disk, a mobile hard disk, a read-only memory (ROM), a random access memory (RAM), a magnetic disk, or an optical disk.

## Claims

1. A paging method, comprising:
determining (210), by a terminal device, that a system frame number, SFN, of a first radio frame is SFN₁ according to SFN₁ mod T=(T/N)×(UE-ID mod N), wherein T is a time length of a discontinuous reception, DRX, cycle, UE-ID is a device identity of the terminal device, and N is a quantity of radio frames that are able to be used for sending the paging message in the DRX cycle of the terminal device;
determining, by the terminal device, a paging time interval used for monitoring a paging message according to the first radio frame; and
monitoring, by the terminal device, the paging message in the paging time interval (230),
wherein determining, by the terminal device, the paging time interval used for monitoring the paging message according to the first radio frame, comprises:
receiving, by the terminal device, first indication information, wherein the first indication information is used for indicating a position of the first radio frame in the paging time interval; and
determining, by the terminal device, the paging time interval according to the position of the first radio frame in the paging time interval,
wherein the paging time interval is same as a synchronization time interval used for detecting a synchronization signal,
**characterized in that**
monitoring, by the terminal device, the paging message in the paging time interval comprises:
receiving, by the terminal device, third indication information, wherein the third indication information is used for indicating a third radio frame in the paging time interval; and
monitoring, by the terminal device, the paging message on the third radio frame.

2. A paging method, comprising:
determining, by a network device, a system frame number, SFN, of a first radio frame and a paging time interval used for sending a paging message (310); determining, by the network device, a position of the first radio frame in the paging time interval (320); and
sending, by the network device, first indication information to a terminal device, wherein the first indication information is used for indicating the position of the first radio frame in the paging time interval, to enable the terminal device to determine the paging time interval according to the position of the first radio frame in the paging time interval and monitor the paging message in the paging time interval (330),
wherein the paging time interval is same as a synchronization time interval used for detecting a synchronization signal,
wherein determining, by the network device, the system frame number, SFN, of the first radio frame comprises:
determining, by the network device, that the system frame number, SFN, of the first radio frame is SFN₁ according to SFN₁ mod T=(T/N)×(UE-ID mod N), wherein T is a time length of a discontinuous reception, DRX, cycle, UE-ID is a device identity of the terminal device, and N is a quantity of radio frames that are able to be used for sending the paging message in the DRX cycle of the terminal device,
**characterized in that** the method further comprises:
sending, by the network device, third indication information to the terminal device, wherein the third indication information is used for indicating a third radio frame in the paging time interval to enable the terminal device to monitor the paging message on the third radio frame.

3. The method according to claim 2, wherein determining, by the network device, the position of the first radio frame in the paging time interval comprises:
determining, by the network device, a position of the first radio frame in the synchronization time interval; and
determining, by the network device, that the position of the first radio frame in the synchronization time interval is the position of the first radio frame in the paging time interval.

4. A terminal device (800), configured to execute the method of claim 1.

5. A network device (900), configured to execute the method of claim 2 or 3.

## Patentansprüche

1. Funkrufverfahren, umfassend:
Bestimmen (210), durch eine Endgerätvorrichtung, dass eine Systemrahmenzahl, SFN, eines ersten Funkrahmens SFN₁ gemäß SFN₁ mod T= (T/N) × (UE-ID mod N) ist, wobei T eine Zeitlänge eines diskontinuierlichen Empfangs- bzw. DRX-Zyklus ist, UE-ID eine Vorrichtungsidentität der Endgerätvorrichtung ist und N eine Anzahl von Funkrahmen ist, die imstande sind, zum Senden der Funkrufnachricht in dem DRX-Zyklus der Endgerätvorrichtung verwendet zu werden;
Bestimmen, durch die Endgerätvorrichtung, eines Funkrufzeitintervalls, das zum Überwachen einer Funkrufnachricht gemäß dem ersten Funkrahmen verwendet wird; und
Überwachen, durch die Endgerätvorrichtung, der Funkrufnachricht in dem Funkrufzeitintervall (230),
wobei Bestimmen, durch die Endgerätvorrichtung, des Funkrufzeitintervalls, das zum Überwachen der Funkrufnachricht gemäß dem ersten Funkrahmen verwendet wird, umfasst:
Empfangen, durch die Endgerätvorrichtung, von ersten Angabeinformationen, wobei die ersten Angabeinformationen zum Angeben einer Position des ersten Funkrahmens in dem Funkrufzeitintervall verwendet werden; und
Bestimmen, durch die Endgerätvorrichtung, des Funkrufzeitintervalls gemäß der Position des ersten Funkrahmens in dem Funkrufzeitintervall,
wobei das Funkrufzeitintervall gleich einem Synchronisationszeitintervall, das zum Detektieren eines Synchronisationssignals verwendet wird, ist,
**dadurch gekennzeichnet, dass**
Überwachen, durch die Endgerätvorrichtung, der Funkrufnachricht in dem Funkrufzeitintervall umfasst:
Empfangen, durch die Endgerätvorrichtung, von dritten Angabeinformationen, wobei die dritten Angabeinformationen zum Angeben eines dritten Funkrahmens in dem Funkrufzeitintervall verwendet werden; und
Überwachen, durch die Endgerätvorrichtung, der Funkrufnachricht auf dem dritten Funkrahmen.

2. Funkrufverfahren, umfassend:
Bestimmen, durch eine Netzwerkvorrichtung, einer Systemrahmenzahl, SFN, eines ersten Funkrahmens und eines Funkrufzeitintervalls, das zum Senden einer Funkrufnachricht (310) verwendet wird; Bestimmen, durch die Netzwerkvorrichtung, einer Position des ersten Funkrahmens in dem Funkrufzeitintervall (320); und
Senden, durch die Netzwerkvorrichtung, von ersten Angabeinformationen an eine Endgerätvorrichtung, wobei die ersten Angabeinformationen zum Angeben der Position des ersten Funkrahmens in dem Funkrufzeitintervall verwendet werden, um die Endgerätvorrichtung in die Lage zu versetzen, das Funkrufzeitintervall gemäß der Position des ersten Funkrahmens in dem Funkrufzeitintervall zu bestimmen und die Funkrufnachricht in dem Funkrufzeitintervall (330) zu überwachen,
wobei das Funkrufzeitintervall gleich einem Synchronisationszeitintervall, das zum Detektieren eines Synchronisationssignals verwendet wird, ist,
wobei Bestimmen, durch die Netzwerkvorrichtung, der Systemrahmenzahl, SFN, des ersten Funkrahmens umfasst:
Bestimmen, durch die Netzwerkvorrichtung, dass die Systemrahmenzahl, SFN, des ersten Funkrahmens SFN₁ gemäß SFN₁ mod T= (T/N) × (UE-ID mod N) ist, wobei T eine Zeitlänge eines diskontinuierlichen Empfangs- bzw. DRX-Zyklus ist, UE-ID eine Vorrichtungsidentität der Endgerätvorrichtung ist und N eine Anzahl von Funkrahmen ist, die imstande sind, zum Senden der Funkrufnachricht in dem DRX-Zyklus der Endgerätvorrichtung verwendet zu werden,
**dadurch gekennzeichnet, dass** das Verfahren ferner umfasst:
Senden, durch die Netzwerkvorrichtung, von dritten Angabeinformationen an die Endgerätvorrichtung, wobei die dritten Angabeinformationen zum Angeben eines dritten Funkrahmens in dem Funkrufzeitintervall verwendet werden, um die Endgerätvorrichtung in die Lage zu versetzen, die Funkrufnachricht auf dem dritten Funkrahmen zu überwachen.

3. Verfahren nach Anspruch 2, wobei Bestimmen, durch die Netzwerkvorrichtung, der Position des ersten Funkrahmens in dem Funkrufzeitintervall umfasst:
Bestimmen, durch die Netzwerkvorrichtung, einer Position des ersten Funkrahmens in dem Synchronisationszeitintervall; und
Bestimmen, durch die Netzwerkvorrichtung, dass die Position des ersten Funkrahmens in dem Synchronisationszeitintervall die Position des ersten Funkrahmens in dem Funkrufzeitintervall ist.

4. Endgerätvorrichtung (800), konfiguriert zum Ausführen des Verfahrens nach Anspruch 1.

5. Netzwerkvorrichtung (900), konfiguriert zum Ausführen des Verfahrens nach Anspruch 2 oder 3.

## Revendications

1. Procédé de radiomessagerie, comprenant :
la détermination (210), par un dispositif terminal, qu'un numéro de trame système, SFN, d'une première trame radio est SFN₁ selon SFN₁ mod T=(T/N)x(UE-ID mod N), où T est une durée d'un cycle de réception discontinue, DRX, UE-ID est une identité de dispositif du dispositif terminal, et N est une quantité de trames radio pouvant être utilisées pour envoyer le message de radiomessagerie dans le cycle DRX du dispositif terminal ;
la détermination, par le dispositif terminal, d'un intervalle de temps de radiomessagerie utilisé pour surveiller un message de radiomessagerie en fonction de la première trame radio ; et
la surveillance, par le dispositif terminal, du message de radiomessagerie dans l'intervalle de temps de radiomessagerie (230),
dans lequel la détermination, par le dispositif terminal, de l'intervalle de temps de radiomessagerie utilisé pour surveiller le message de radiomessagerie en fonction de la première trame radio, comprend :
la réception, par le dispositif terminal, de premières informations d'indication, dans lequel les premières informations d'indication servent à indiquer une position de la première trame radio dans l'intervalle de temps de radiomessagerie ; et
la détermination, par le dispositif terminal, de l'intervalle de temps de radiomessagerie en fonction de la position de la première trame radio dans l'intervalle de temps de radiomessagerie,
dans lequel l'intervalle de temps de radiomessagerie est identique à un intervalle de temps de synchronisation utilisé pour détecter un signal de synchronisation,
**caractérisé en ce que**
la surveillance, par le dispositif terminal, du message de radiomessagerie dans l'intervalle de temps de radiomessagerie comprend :
la réception, par le dispositif terminal, de troisièmes informations d'indication, dans lequel les troisièmes informations d'indication servent à indiquer une troisième trame radio dans l'intervalle de temps de radiomessagerie ; et
la surveillance, par le terminal, du message de radiomessagerie sur la troisième trame radio.

2. Procédé de radiomessagerie, comprenant :
la détermination, par un dispositif de réseau, d'un numéro de trame système, SFN, d'une première trame radio et d'un intervalle de temps de radiomessagerie utilisé pour l'envoi d'un message de radiomessagerie (310) ;
la détermination, par le dispositif de réseau, d'une position de la première trame radio dans l'intervalle de temps de radiomessagerie (320) ; et
l'envoi, par le dispositif réseau, de premières informations d'indication à un terminal, dans lequel les premières informations d'indication servent à indiquer la position de la première trame radio dans l'intervalle de temps de radiomessagerie, pour permettre au terminal de déterminer l'intervalle de temps de radiomessagerie en fonction de la position de la première trame radio dans l'intervalle de temps de radiomessagerie et de surveiller le message de radiomessagerie dans l'intervalle de temps de radiomessagerie (330),
dans lequel l'intervalle de temps de radiomessagerie est identique à un intervalle de temps de synchronisation utilisé pour détecter un signal de synchronisation,
dans lequel, la détermination, par le dispositif de réseau, du numéro de trame système, SFN, de la première trame radio comprend :
la détermination, par le dispositif de réseau, que le numéro de trame système, SFN, de la première trame radio est SFN₁ selon SFN₁ mod T= (T/N) × (UE-ID mod N), dans lequel T est une durée d'un cycle de réception discontinue, DRX, UE-ID est une identité de dispositif du dispositif terminal, et N est une quantité de trames radio pouvant être utilisées pour envoyer le message de radiomessagerie dans le cycle DRX du dispositif terminal,
**caractérisé en ce que** le procédé comprend en outre :
l'envoi, par le dispositif de réseau, de troisièmes informations d'indication, dans lequel les troisièmes informations d'indication servent à indiquer une troisième trame radio dans l'intervalle de temps de radiomessagerie afin de permettre au dispositif terminal de surveiller le message de radiomessagerie sur la troisième trame radio.

3. Procédé selon la revendication 2, dans lequel la détermination, par le dispositif de réseau, de la position de la première trame radio dans l'intervalle de temps de radiomessagerie comprend :
la détermination, par le dispositif de réseau, d'une position de la première trame radio dans l'intervalle de temps de synchronisation ; et
la détermination, par le dispositif de réseau, que la position de la première trame radio dans l'intervalle de temps de synchronisation est la position de la première trame radio dans l'intervalle de temps de radiomessagerie.

4. Terminal (800), configuré pour exécuter le procédé selon la revendication 1.

5. Dispositif de réseau (900), configuré pour exécuter le procédé selon la revendication 2 ou 3.
